# EUROPEAN PATENT APPLICATION

(11) **EP 2 896 512 A1**
(43) Date of publication of application: **22.07.2015**
(21) Application number: 14151696.3
(22) Date of filing: 18.01.2014
(51) Int. Cl.: B60B 27/00, B60B 27/02, B60B 27/04

(54) **Bicycle hub sealing structures**

(71) Applicant: Joy Cycle Parts (Shanzhen) Co Ltd, ShenZhen Guangdong (CN)
(72) Inventor: Chen, Shih-Wei, ShenZhen Guangdong (CN)
(74) Representative: Baldwin, Mark

(57) **Abstract**

A bicycle hub sealing structure comprises: axle shaft, nuts, hub enclosure, a sleeve and a ratchet wheel, wherein, the hub enclosure rear end and the sleeve front end are attached to the axle shaft respectively through the first ball bearing and the second ball bearing, meanwhile the second ball bearing is combined with the sleeve through the balls, the nuts are positioned on the front and rear ends of the axle shaft, the rear end of the ratchet wheel is located inside the hub enclosure, and is combined with the sleeve through the balls, the front end of the hub enclosure has a housing cavity, the rear end of the sleeve is extended into the bulge loop inside the housing cavity, a sleeve oil seal is provided between the bulge loop outside wall and the housing cavity inside wall, and a leakage-proof gasket is provided between the bulge loop inside wall and the ratchet wheel. The sleeve oil seal and the leakage-proof gasket are of a simple structure to provide double sealing for the ratchet wheel, and to prevent foreign objects to enter the hub enclosure. The bent portion and the seal are flexible and will not affect the relative rotation of the various cooperating components inside the hub enclosure, ensuring smooth riding of the bicycle.

## Description

### BACKGROUND OF INVENTION

### 1. Field of the Invention

The present invention relates generally to the technical field of bicycle parts, and more particularly to innovative bicycle hub sealing structures.

### 2. Description of Related Art

The hub is an important component to connect the axle shaft and the spokes in the structure of a bicycle. Its quality has a direct influence on the performance of the bicycle. During usage of the bicycle, the hub is exposed to water, dust and other objects. Therefore, isolating the internal structure of the hub from the outer environment has become a subject of research for manufacturers.

In bicycle hubs commonly seen in the present market, sealing between the sleeve and the ratchet wheel is not so good. Water, dust or other objects can easily enter the ratchet wheel, not only affecting the performance of the hub, but also reducing the life of the hub. Therefore, there is a need for improvement.

### SUMMARY OF THE INVENTION

An object of the invention is to provide a new bicycle hub sealing structure featuring a simple and compact structure as well as an enhanced sealing effect, or to at least provide an alternative to existing hub structures.

The invention includes a bicycle hub sealing structure comprising: axle shaft, nuts, hub enclosure, sleeve and ratchet wheel, wherein, the hub enclosure rear end and the sleeve front end are attached to the axle shaft respectively through a first ball bearing and a second ball bearing. The second ball bearing is combined with the sleeve through the balls, the nuts are positioned on the front and rear ends of the axle shaft, the rear end of the ratchet wheel is located inside the hub enclosure, and is combined with the sleeve through the balls, the front end of the hub enclosure has a housing cavity, the rear end of the sleeve is extended into the bulge loop inside the housing cavity, a sleeve oil seal is provided between the bulge loop outside wall and the housing cavity inside wall, and a leakage-proof gasket is provided between the bulge loop inside wall and the ratchet wheel.

### BRIEF DESCRIPTION OF THE DRAWINGS

FIG. 1 is a schematic view of Embodiment 1 of the invention.
FIG. 2 is a partially enlarged view of Position A in FIG. 1.
FIG. 3 is a schematic view of Embodiment 2 of the invention.
FIG. 4 is a schematic view of Embodiment 3 of the invention.
FIG. 5 is a schematic view of Embodiment 4 of the invention.
FIG. 6 is a schematic view of Embodiment 5 of the invention.
FIG. 7 is a schematic view of Embodiment 6 of the invention.
FIG. 8 is a schematic view of Embodiment 7 of the invention.

### DETAILED DESCRIPTION

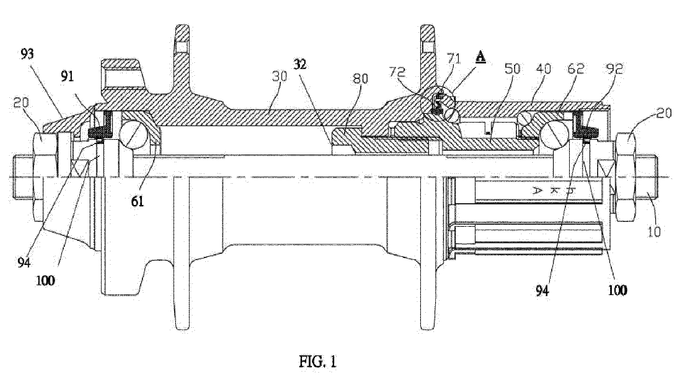

Figures 1 to 2 depict Embodiment 1 of a bicycle hub sealing structure. The bicycle hub sealing structure comprises an axle shaft 10, nuts 20, hub enclosure 30, sleeve 40 and ratchet wheel 50. The rear and front ends (left and right as viewed in Figure 1) of the axle shaft 10 are respectively attached to the rear (left) end of the hub enclosure 30 and the front (right) end of the sleeve 40 through a first ball bearing 61 and a second ball bearing 62. The sleeve 40 and hub enclosure 30 are respectively locked on the front and rear ends of the axle shaft 10 by nuts 20. The second ball bearing 62 is attached to the sleeve 40 through the balls. The rear (left) end of the ratchet wheel 50 is set inside the hub enclosure 30. The ratchet wheel 59 is attached to the sleeve 40 through the balls of the second ball bearing 62 at least approximately at the central position of the ratchet wheel 50. The inside wall of the hub enclosure 30 is configured with a step 32. On the axle shaft 10, a ratchet wheel mounting nut 80 is provided. The ratchet wheel 50 is fixed on the step 32 through its rear (left) end and is connected to the ratchet wheel mounting nut 80 on the axle shaft 10 through a threaded joint.

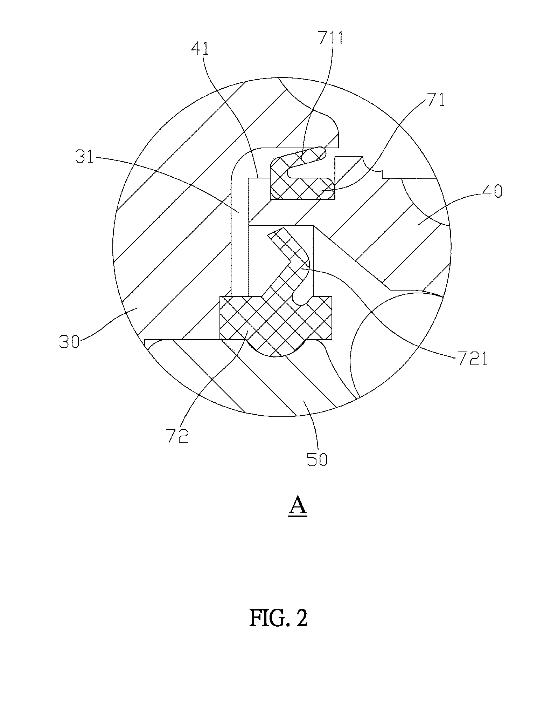

As best seen in Figure 2, the front (right) end of the hub enclosure 30 has a housing cavity 31 and the rear (left) end of the sleeve 40 is formed with a bulge loop 41 and extends into the housing cavity 31. Between the outside wall of the bulge loop 41 and the inside wall of the housing cavity 31, a sleeve oil seal 71 is provided. Further, between the inside wall of the bulge loop 41 and the ratchet wheel 50, a leakage-proof gasket 72 is provided. The bottom (left) and rear (radially inner) end of the leakage-proof gasket 72 are respectively fitted on a bottom (generally radially extending) end face of the housing cavity 31 and an external (radially outer) end face of the ratchet wheel 50. On the middle position of the leakage proof gasket 72, a seal 721 is formed. The seal 721 is in an arc shape, with its opening facing toward the bottom end face of the housing cavity 31. The top of the seal 721 resists (presses) against an inside (radially inner) wall of the bulge loop 41. The inside (radially inner) end of the sleeve oil seal 71 is fitted on the outside (radially outer) wall of the bulge loop 41, while the outside end is an elastic bent portion 711 that forms an acute angle with the main body of the sleeve oil seal 71. The bent portion 711 of the sleeve oil seal 71 is bent toward the outside of the housing cavity 31 of the hub enclosure 30, and resists (presses) against an inside wall of the housing cavity 31 to accomplish a sealing effect.

The shape and structure of the sleeve oil seal 71 and the leakage-proof gasket 72 can prevent the entry of foreign objects into the hub enclosure 30. The elasticity of the bent portion 711 and the seal 721 will not affect the relative rotation of the various parts inside the hub enclosure 30 so that riding of the bicycle is smoother.

Between the hub enclosure 30 and the sleeve 40 and externally of the first ball bearing 61 and the second ball bearing 62, a first layer sealing device 91 and a second layer sealing device 92 are respectively provided. The first layer sealing device 91 and the second layer sealing device 92 can be made up of two plane oil seals or one plane oil seal and one waterproof cover. The first layer sealing device 91 and second layer sealing device 92 configured on the left and right sides of the hub enclosure 30 can have the same structure or different structures.

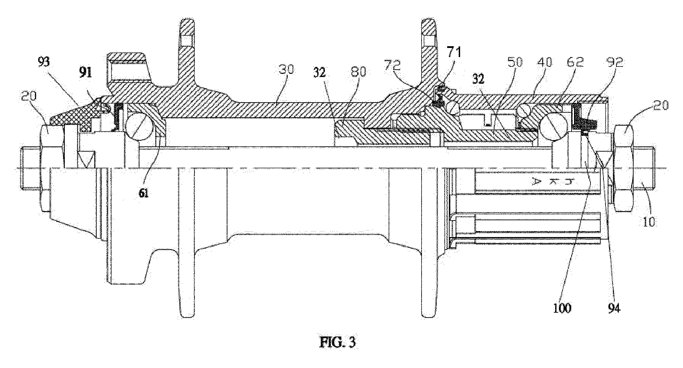

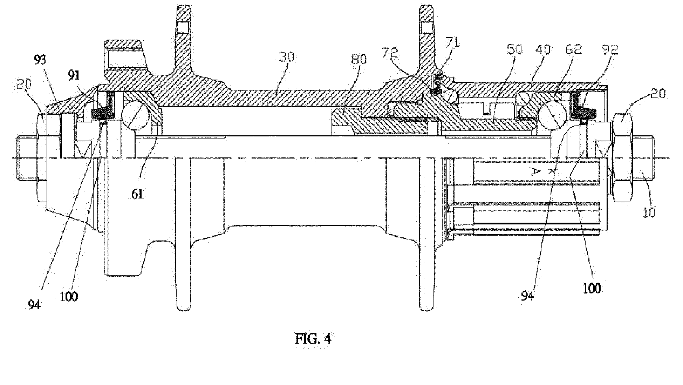

Figures 3 to 8 depict various embodiments with different styles of the first layer sealing device 91 and the second layer sealing device 92. FIG. 4 is of the same structure as FIG. 1, except that the outside of the first layer sealing device 91 is configured with an axle cap 93 sealing the hub enclosure 30, and the inside space of the axle cap 93 can hold the first layer sealing device 91. Referring to FIG. 3, in Embodiment 2, the first layer sealing device 91 and the second layer sealing device 92 respectively seal on the outsides of the first ball bearing 61 and the second ball bearing 62. The first layer sealing device 91 is fitted on the axle shaft 10 with its periphery having a certain thickness and resisting (pressing) against the inside wall of the hub enclosure 30. The second layer sealing device 92 is configured with a snap 94 on its inner side to fit with a groove 100 provided on the axle shaft 10, with its periphery having a certain thickness and resisting (pressing) against the inside of the sleeve 40.

Referring to FIG. 4, in Embodiment 3 the first and second layer sealing devices 61, 62 adopt the structure of the second layer sealing device 92 in FIG. 3 and are fitted through respective snaps 94 into respective grooves 100 provided on periphery of the front and rear ends of the axle shaft 10.

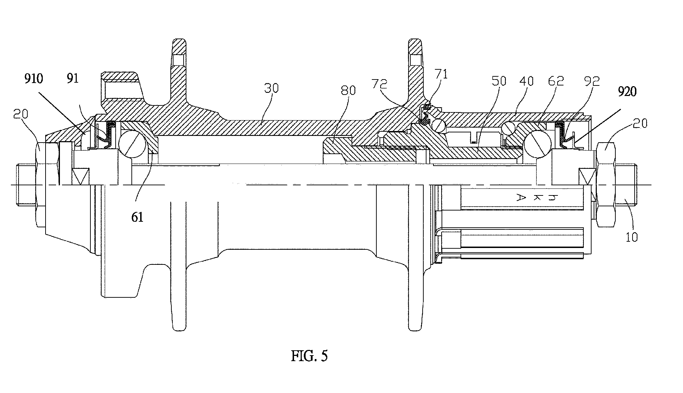

Referring to FIG. 5, in Embodiment 4, the first layer sealing device 91 and the second layer sealing device 92 respectively sealing on the outsides of the first ball bearing 61 and the second ball bearing 62 are of the same structure. The outside of the inside ends of the sealing devices 91, 92 are provided with L-shaped waterproof covers 910, 920. The waterproof cover 920 is fitted on the axle shaft 10 towards the centre of the sleeve 40.

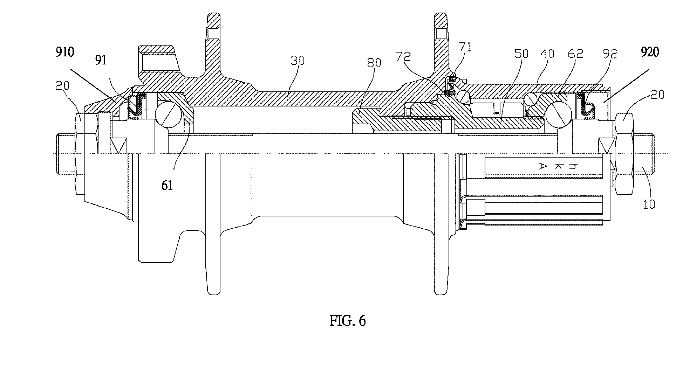

As shown in FIG. 6, in Embodiment 5, the waterproof covers 910, 920 are in a Π shape (generally U-shaped).

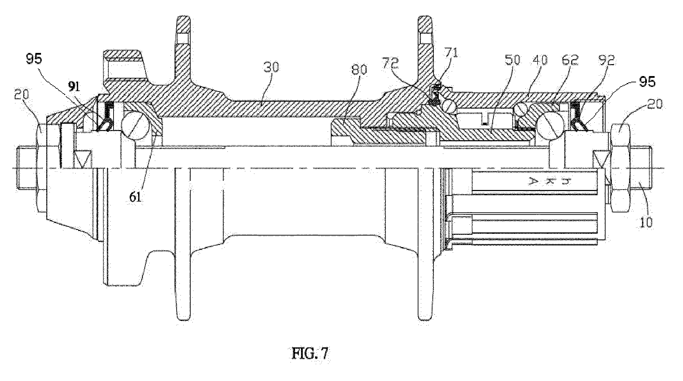

Referring to FIG. 7, in Embodiment 6, the first layer sealing device 91 and the second layer sealing device 92 are of the same structure. The inside ends of the sealing devices 91, 92 have a concave bevel 95. The two ends of the concave bevel 95 resist (press) against the axle shaft 10 to enhance the sealing effect. The periphery of the sealing device 91 has a certain thickness and resists (presses) against the inside wall of the hub enclosure 30.

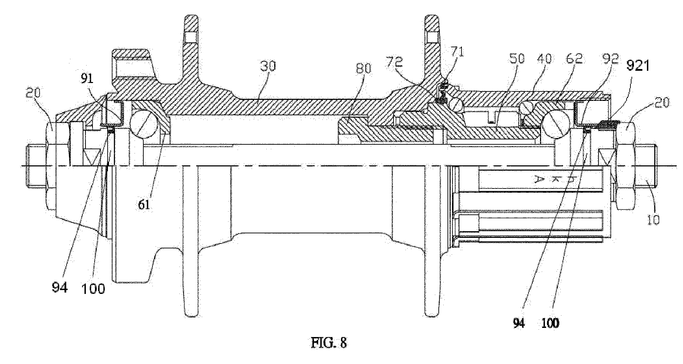

Referring to FIG. 8, in Embodiment 7, the first layer sealing device 91 and the second layer sealing device 92 are basically of the same structure, with a difference that the second layer sealing device 92 is further configured with an extending portion 921. The first layer sealing device 91 and the second layer sealing device 92 have a generally L shaped cross-section. The inner sides of the sealing devices resist (press) on the axle shaft 10. The peripheries are provided with snaps 94, respectively fitting into the grooves 100 provided on the peripheries of the first ball bearing 61 and the second ball bearing 62, and with the peripheries of the first layer sealing device 91 and the second layer sealing device 92 having a certain thickness and resisting against the inside wall of the hub enclosure 30 and sleeve 40.

All the above described are only preferred embodiments to disclose the present invention. All equivalent modifications or variations made on the basis of the description and drawings of the present invention shall fall within the scope of the present invention and be claimed.

The described embodiments provide the following beneficial effects: the front (left) end of the hub enclosure is formed with a housing cavity, the rear (right) end sleeve is formed with a bulge loop extending into the housing cavity, and a sleeve oil seal is provided between the outside wall of the bulge loop and the inside wall of the housing cavity, a leakage-proof gasket is provided between the inside wall of the bulge loop and the ratchet wheel, so as to achieve a double-sealing effect for the ratchet wheel. With a simple and compact structure, the effect is very good.

The lower end of the above-mentioned sleeve oil seal is fitted on the outside wall of the bulge loop, the outside end is an elastic bent portion, resisting (pressing) against the inside wall of the housing cavity 31 for sealing.

The above-mentioned bent portion may be bent toward the outside of the outside of the housing cavity of the hub enclosure, and forms an acute angle with the main body of the sleeve oil seal.

The bottom and rear ends of the above-mentioned leakage-proof gasket are respectively fitted on the bottom end face of the housing cavity and the external end face of the ratchet wheel, on the middle position, a seal is formed. The top of the seal resists (presses) against the inside wall of the bulge loop.

The above-mentioned seal is in an arc shape, with its opening facing toward the bottom end face of the housing cavity.

The rear end of the above-mentioned ratchet wheel is connected to the ratchet wheel mounting nut on the axle shaft through threaded joint. The ratchet wheel mounting nut is positioned by the step on the inside wall of the hub enclosure.

A first layer sealing device and second layer sealing device are respectively provided between the hub enclosure and sleeve. The sealing devices are disposed axially outwardly of the first and second ball bearings.

The above-mentioned first layer sealing device and the second layer sealing device may be made up of two plane oil seals or one plane oil seal and one waterproof cover.

The above-mentioned first layer sealing device and the second layer sealing device may be of the same structure.

The above-mentioned first layer sealing device and the second layer sealing device may be of different structures.

Embodiments of the invention provide a bicycle hub comprising an axle, a hub enclosure and a sleeve that are secured to said axle and supported on said axle by rolling bearings, a toothed wheel housed between said axle and said hub enclosure and sleeve and a sealing structure sealing between said hub enclosure, sleeve and toothed wheel, wherein said seal structure comprises a first seal disposed between said hub enclosure and sleeve and a second seal disposed between said sleeve and toothed wheel.

The hub enclosure may have an end configured to receive respective ends of said sleeve and toothed wheel and said first and second seals may be disposed at said end of the hub enclosure. The first and second seals may be radially aligned with respect to the longitudinal axis of the axle. The first seal may be disposed radially outwardly of the second seal. The second seal may engage the hub enclosure, sleeve and toothed wheel. The first and second seals may each comprise a resilient projection. The resilient projection of the first seal may engage hub enclosure. The resilient projection of the second seal may engage the sleeve. The sleeve may comprise a flange that is received in the hub enclosure. The first seal may be seated on a radially outer side of the flange and the second seal may seal against the radially inner side of the flange. The second seal may seat on the toothed wheel. The second seal may engage the hub enclosure.

In the preceding description reference has been made to the front, rear, left and right ends of the structure. These designations are given simply for convenience of description with reference to the orientation of the parts shown in the drawings and should not be taken as limiting.

## Claims

1. A bicycle hub sealing structure, comprising an axle shaft (10), a hub enclosure (30), a sleeve (40) and a ratchet wheel (50), wherein:
the rear and front ends of the axle shaft are respectively connected to the rear end of the hub enclosure and the front end of the sleeve through a first ball bearing (61) and a second ball bearing (62) and are locked on the front end and rear end of the axle shaft through a nut (20);
the second ball bearing is combined with the sleeve through the balls, the rear end of the ratchet wheel is located inside the hub enclosure and is combined with the sleeve through the balls;
the front end of the hub enclosure has a housing cavity (31), the rear end of the sleeve is formed with a bulge loop (41) extending into the housing cavity;
between the outside wall of the bulge loop (41) and the inside wall of the housing cavity (31) a sleeve oil seal (71) is provided; and
between the inside wall of the bulge loop (41) and the ratchet wheel (50) a leakage-proof gasket (72) is provided.

2. A bicycle hub sealing structure as claimed in Claim 1, wherein the inside end of the sleeve oil seal (71) is fitted on the outside wall of the bulge loop (41) and the outside end is an elastic bent portion (711) resisting against the inside wall of the housing cavity to accomplish a sealing effect.

3. A bicycle hub sealing structure as claimed in Claim 2, wherein the bent portion (711) of the sleeve oil seal (71) is bent toward the outside of the housing cavity (31) of the hub enclosure (30).

4. A bicycle hub sealing structure as claimed in Claim 1, 2 or 3, wherein the bottom and rear end of the leakage-proof gasket (72) are respectively fitted on the bottom end face of the housing cavity (31) and the external end face of the ratchet wheel (50) and on the middle position, a seal (721) is formed, the top of which seal resists against the inside wall of the bulge loop (41).

5. A bicycle hub sealing structure as claimed in Claim 4, wherein the seal (721) is in an arc shape, with its opening facing toward the bottom end face of the housing cavity (31).

6. A bicycle hub sealing structure as claimed in any one of the preceding Claims, wherein the inside wall of the hub enclosure (30) is configured with a step (32), on the axle shaft (10) a ratchet wheel mounting nut (80) is provided and positioned through the step and the rear end of the ratchet wheel is connected to the ratchet wheel mounting nut on the axle shaft through a threaded joint.

7. A bicycle hub sealing structure as claimed in any one of the preceding Claims, wherein inside the hub enclosure (30) and the sleeve (40) and outside the first ball bearing (61) and the second ball bearing (62), a first layer sealing device (91) and a second layer sealing device (92) are respectively provided.

8. A bicycle hub sealing structure as claimed in Claim 7, wherein the first layer sealing device (91) and the second layer sealing device (92) are made up of two plane oil seals or one plane oil seal and one waterproof cover.

9. A bicycle hub sealing structure as claimed in Claim 7 or 8, wherein first layer sealing device and second layer sealing device have the same structure.

10. A bicycle hub sealing structure as claimed in Claim 7 or 8, wherein first layer sealing device and second layer sealing device have different structures.
